Europäisches Patentamt

European Patent Office

Office européen des brevets

(19)

(11) Veröffentlichungsnummer: **0 127 633**
**B1**

(12) **EUROPÄISCHE PATENTSCHRIFT**

(45) Veröffentlichungstag der Patentschrift:
23.04.86

(51) Int. Cl.⁴: **C 03 C 3/04**, C 03 C 4/08

(21) Anmeldenummer: 83903526.8

(22) Anmeldetag: 24.11.83

(86) Internationale Anmeldenummer:
**PCT/EP 83/00314**

(87) Internationale Veröffentlichungsnummer:
**WO 84/02127 (07.06.84** Gazette 84/14)

(54) **PbO-FREIE GLÄSER FÜR KATHODENSTRAHLRÖHREN MIT HOHER RÖNTGENSCHUTZWIRKUNG BEI GLEICHZEITIG GUTER SÄUREBESTÄNDIGKEIT UND STRAHLENSTABILITÄT.**

(30) Priorität: 04.12.82 DE 3244970

(43) Veröffentlichungstag der Anmeldung:
**12.12.84 Patentblatt 84/50**

(45) Bekanntmachung des Hinweises auf die Patenterteilung:
**23.04.86 Patentblatt 86/17**

(84) Benannte Vertragsstaaten:
**FR GB NL**

(56) Entgegenhaltungen:
**FR - A - 2 017 469**
**FR - A - 2 174 105**
**US - A - 4 277 286**

(73) Patentinhaber: **Schott Glaswerke, Hattenbergstrasse 10, D-6500 Mainz (DE)**

(84) Benannte Vertragsstaaten: **FR NL**

(73) Patentinhaber: **CARL-ZEISS-STIFTUNG, Schott Glaswerke Hattenbergstrasse 10, D-6500 Mainz 1 (DE)**

(84) Benannte Vertragsstaaten: **GB**

(72) Erfinder: **SACK, Werner, An der Feldkirsch 15, D-6500 Mainz (DE)**

(74) Vertreter: **Rasper, Joachim, Dr., Bierstadter Höhe 22, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Technisches Gebiet

Die Erfindung betrifft PbO-freie Gläser für Kathodenstrahlröhren mit hoher Röntgenschutzwirkung bei gleichzeitig guter Säurebeständigkeit und Strahlenstabilität.

### Zugrunde liegender Stand der Technik

Aus der DE-A 31 03 345 (US-A 4,277,286) sind Zusammensetzungen strahlenstabiler Gläser für die Herstellung von Kathodenstrahlröhren bekannt. Für diese Gläser liegt der Röntgenabsorptionskoeffizient $\mu$ für 0,6 Å (0,06 mm) bei Werten von 34,8 bis 51,8 cm$^{-1}$ (s. S. 15), wofür in erster Linie folgende Komponenten verantwortlich sind:

| (Gew.-%) | |
|---|---|
| SrO | von 2 – 14 |
| BaO | von 10 – 20 |
| ZrO$_2$ | von 2 – 8 |
| ZnO | von 5 – 12 |

Die Stabilität gegen UV-, Elektronen- und Röntgenstrahlen (e- und $\gamma$-Strahlen) wird erreicht durch das Fehlen leicht reduzierbarer Komponenten, wie PbO und As$_2$O$_3$, und durch die Einführung bekannter stabilisierender Zusätze, wie 0,3-1,0 Gew.-% CeO$_2$ (spezielle zur Verhinderung der Bräunung durch Röntgenstrahlen) und 0,5-1,0 Gew.-% TiO$_2$ (speziell zur Verhinderung der Solarisation, d.h. Verhinderung der Verfärbung durch UV-Strahlen).

Die in der DE-A 31 03 345 genannten Gläser werden bevorzugt verwendet zur Herstellung von Fernsehröhren bzw. von Fernsehgeräten grossflächiger Bildanzeigen (grossvolumige Bildröhre) oder auch von kleineren Fernsehprojektionsröhren mit hohen Betriebsspannungen bis ca. 40 kV mit an eine Wand projizierter Bildanzeige.

Während des Herstellungsprozesses der Bildröhren müssen die Glasteile einem sauren Waschprozess mit verdünnter HF bzw. mit unterschiedlich konzentrierten NH$_4$HF$_2$-Lösungen unterzogen werden. Dabei darf kein sichtbarer Angriff eintreten, etwa durch Entstehung von Ätzstrukturen. Dasselbe gilt für den Rückgewinnungsprozess von Glasteilen fehlerhafter Bildröhren.

Ausser der zwingend notwendig hohen Röntgenschutzwirkung, einer hohen Festigkeit gegen Verfärbung durch UV-, e- und $\gamma$-Strahlen müssen die Gläser daher gleichzeitig auch noch eine ausreichende Säure-Resistenz aufweisen.

Die Praxis zeigt, dass für die üblichen Fernsehgläser ganz allgemein und auch für die hier betrachteten Gläser mit hoher Röntgenschutzwirkung dann eine ausreichende Säurebeständigkeit vorliegt, wenn nach DIN 12116 ein Wert von 100 mg/dm² nicht überschritten wird. Im Vergleich zu bekannten Laborgläsern ist dies ein schlechter Säurewert; für die Bildröhrengläser dagegen haben sich solche Gewichtsverluste $\leqslant$ 100 mg/dm² durch Säureangriff nach DIN 12116 als ausreichend erwiesen.

Für die normalen Bildschirmgläser (für Schwarz/Weiss und Farbe) liegen die $\mu$-Werte für 0,6 Å im allgemeinen zwischen 20 und 28 × cm$^{-1}$. Erreicht wird das mit Gläsern, die rund 20 Gew.-% an BaO, SrO, ZrO$_2$, ZnO und PbO enthalten, und die ohne Schwierigkeit die Anforderung an die Säurebeständigkeit erfüllen. Bei Fernsehgeräten bzw. Bildröhren mit deutlich höherer Röntgenschutzwirkung $\mu > 40$ × cm$^{-1}$ (für 0,6 Å) wird die Erfüllung einer ausreichenden Säurebeständigkeit zu einem Problem, weil die Konzentration der zuvor genannten Komponenten (die praktisch ausschliesslich die Röntgenabsorption im Glas bewirken) weit über 20% hinaus erhöht werden muss, wodurch im allgemeinen die Säurebeständigkeit abnimmt.

Die bekannten Gläser gemäss DE-A 31 03 345 erfüllen die Forderung nach ausreichender Säurebeständigkeit nicht, wie sich bei Vergleichsversuchen zeigt; dabei wurden die Beispiele Nrn. 3, 5, 11, 13 und 14 im 1 l fassenden Platintiegel zwischen 1450/1400°C während 2,5 h nachgeschmolzen, durch anschliessendes Rühren mittels Pt-Rührer bis ca. 1200°C homogenisiert, schliesslich nach 45 min Abstehen bei 1380°C in eine NCT-3-Stahlform gegossen und in einem Kühlofen ab 520°C mit 20°C/h auf Zimmertemperatur abgekühlt. Von den gekühlten Gussstücken wurden die Säurebeständigkeit nach DIN 12116 und die Wasserbeständigkeit nach DIN 12111 bestimmt. Die Versuchsergebnisse sind in Tabelle 1 zusammengefasst:

(Tabelle auf der nächsten Seite)

Ziel der vorliegenden Erfindung sind Gläser für Kathodenstrahlröhren mit hoher Röntgenschutzwirkung und guter Strahlenstabilität, die zugleich eine ausreichende Säurebeständigkeit aufweisen.

### Offenbarung der Erfindung

Dieses Ziel wird mit Gläsern gemäss den Patentansprüchen erreicht.

Es wurde überraschend gefunden, dass mit den für die Röntgenstrahlenabsorption und für eine gute Strahlenstabilität wirksamen Komponenten BaO, ZnO, ZrO$_2$ und SrO – denselben Bestandteilen der Gläser gemäss DE-A 31 03 345, jedoch in anderen Konzentrationsbereichen – Gläser erschmolzen werden können, welche die Anforderungen an Strahlenschutz, Strahlenstabilität und Säurebeständigkeit gleichzeitig erfüllen.

In den erfindungsgemässen Gläsern liegen die für die Strahlenstabilität entscheidenden Komponenten in folgenden Bereichen vor:

| (Gew.-%) | |
|---|---|
| SrO | von 15,0 – 22,0 |
| BaO | von 0 – 7,0 |
| ZrO$_2$ | von 6,3 – 10,3 |
| ZnO | von 0 – 5,0 |
| SrO + BaO + ZrO$_2$ + ZnO | von 32,0 – 36,5 |

In der Säurebeständigkeit nach DIN 12116 erreichen die Gläser Werte von 18,3-82 mg/dm²

*Tabelle 1*

| Bestandteile/ Eigenschaften | 3 | 5 | 11 | 13 | 14 |
|---|---|---|---|---|---|
| $SiO_2$ | 49,64 | 50,41 | 47,94 | 45,82 | 51,50 |
| $Al_2O_3$ | 1,70 | 1,70 | 1,36 | 1,34 | 1,41 |
| $ZrO_2$ | 3,00 | 3,00 | 3,28 | 3,24 | 3,41 |
| $ZnO$ | 10,60 | 7,60 | 9,75 | 9,64 | 10,14 |
| $CaO$ | 1,80 | 1,80 | — | — | — |
| $SrO$ | 3,40 | 6,40 | 6,90 | 9,55 | 10,04 |
| $BaO$ | 14,90 | 14,90 | 18,39 | 18,17 | 10,62 |
| $Li_2O$ | 1,50 | 1,50 | 1,19 | 1,18 | 1,24 |
| $Na_2O$ | 6,50 | 5,70 | 5,78 | 5,71 | 6,01 |
| $K_2O$ | 5,10 | 5,10 | 7,22 | 7,16 | 7,35 |
| $TiO_2$ | 0,80 | 0,80 | — | — | — |
| $CeO_2$ | 0,66 | 0,66 | — | — | — |
| $Sb_2O_3$ | 0,40 | 0,40 | 0,39 | 0,39 | 0,41 |
| $B_2O_3$ | — | — | — | — | — |
| Prozent Summe | 100,00 | 99,97 | 102,20 | 102,20 | 102,13 |
| Dichte (g/ccm) | 3,080 | 3,083 | 3,184 | 3,237 | 3,063 |
| $\mu$ bei 0,6 Å ($cm^{-1}$) | 38,3 | 40,6 | 47,0 | 51,8 | 45,2 |
| Säurebeständigkeit nach DIN 12116 | ca 1570 | ca 810 | ca. 16000 | ca. 18000 | ca. 1280 |
| Wasserbeständigkeit nach DIN 12111 | 44 | 54 | 54 | 56 | 59 |
| $\alpha \times 10^7$ (20-300° C)/° C | 87,3 | 96,7 | 97,4 | 100,7 | 94,3 |
| Tg (° C); →ca. $10^{13,5}$ Po | 498 | 502 | 503 | 502 | 502 |

Gewichtsverlust und sind damit allen bisher bekannt gewordenen, ähnlichen Gläsern weit überlegen. Infolge der insgesamt mässigen Säurebeständigkeit der Gläser hat die Homogenität (Schlierigkeit) der Glasschmelzen auf die Säurebeständigkeitsbestimmung nach DIN 12116 naturgemäss einen grossen Einfluss, so dass bei Parallelbestimmungen unterschiedliche Werte erhalten werden können. Diese sind dann z.B. für die Gläser 5 und 13 in Tabelle 4 aufgeführt. In der Wasserbeständigkeit nach DIN 12111 werden die Werte von 47-350 µg $Na_2O$/g Griess (2. bis 4. hydrolyt. Klasse) erreicht, und in der Laugenbeständigkeit nach DIN 52322 liegen die $ZrO_2$-reichen Gläser sogar in der 1. Laugenklasse.

Die Überlegenheit der Gläser wird noch deutlicher, wenn gleichzeitig die aus der Zusammensetzung resultierenden, sehr hohen Röntgenabsorptionswerte $\mu$ mit in Betracht gezogen werden. Der $\mu$-Wert für 0,6 Å liegt für diese Gläser zwischen 51,8-63,1 × $cm^{-1}$, insbesondere zwischen 53,5-63 × $cm^{-1}$. Da für die Gesamtabsorption von Röntgenstrahlen das Produkt aus Glasdicke und Absorptionskoeffizient $\mu$ verantwortlich ist, hat dies zur Folge, dass beispielsweise der Schirm einer hochbelastbaren Projektionsröhre dünnwandiger gepresst werden kann im Vergleich zu einem weniger stark absorbierenden Glas, womit in vorteilhafter Weise eine höhere thermische Belastbarkeit der Röhre im Betrieb erreicht wird und damit gleichzeitig auch eine gewisse Gegensteuerung zum negativen Einfluss der relativ hohen E-Moduln auf die mechanische Festigkeit dieser Gläser.

Die UV-Stabilität der Gläser (Solarisationsfestigkeit) entspricht denen nach dem Stande der Technik. Zur Prüfung derselben werden 5 mm dikke, polierte Glasproben im Abstand von 7 cm einer 24-h-Bestrahlung mit einer Hg-Hochdrucklampe ausgesetzt, deren Strahlenmaximum bei 365 nm liegt mit einer weiteren Bande bei 254 cm. Der Transmissionsrückgang von bestrahlter zu unbestrahlter Probe ist ein Mass für die UV- bzw. die Solarisationsfestigkeit. Für die erfindungsgemässen Gläser liegt der kritische Wellenlängenbereich zwischen 360 und 420 nm, und der Rückgang bewegt sich in diesem für das Auge nicht wahrnehmbaren Wellenlängenbereich zwischen 20-2%. Durch Zugabe von $TiO_2$ (bis ca. 1 Gew.-%) kann die UV-Stabilität erhöht werden. Bei einem gleichzeitigen Gehalt an $CeO_2$ (bis ca. 2 Gew.-%) als wirksamstes Mittel zur Verminderung der Verfärbung durch Röntgenstrahlen verbietet sich jedoch eine maximale Einführung von $TiO_2$ wegen des Auftretens eines deutlichen zitronengelben Farbtones. Hierdurch wird die Gesamttransmission der Gläser vermindert, und beispielsweise kann eine gezielte Einfärbung mit CoO und NiO (vorgegebene Farbkoordinaten x, y im Farbtondreieck nach der Normfarbtafel DIN 5033) unmöglich werden. Ein $CeO_2$-Zusatz ist aber für diese für hohe Betriebsspannungen geeigneten Gläser unbedingt erforderlich, weil damit besonders — wie bereits ausgeführt — die Verfärbung der durch die Elektronen ausgelösten sekundären Röntgenstrahlung deutlich reduziert werden kann. Je nach den Betriebsbedingungen dieser Kathodenstrahlröhren wird man daher für den $TiO_2$- und $CeO_2$-Zusatz

einen Kompromiss anstreben, etwa mit 0,3-0,5 Gew.-% $TiO_2$ und 0,65-0,80 Gew.-% $CeO_2$.

Zur Untersuchung der e- und $\gamma$-Browning-Stabilität wurden die erfindungsgemässen Gläser einer Bestrahlung mit der Elektronenkanone mit 0,14 A·s/cm² bei einer Beschleunigungsspannung von 50 kV (entspricht einer Strahlendosis von 20,6 r) ausgesetzt, und danach wurde die Transmission gemessen von 300-600 nm; Dicke der polierten Messproben: 5mm. Der Durchlässigkeitsrückgang gegenüber der unbestrahlten Probe ist ein Mass für die Verfärbung durch e- und $\gamma$-Browning. Wird die bestrahlte Probe danach mit 20° C/h auf 400° C aufgeheizt und 4 h bei dieser Temperatur gehalten, so verschwindet das $\gamma$-Browning, während das e-Browning erhalten bleibt.

Durch erneute Messung der Transmission der abgekühlten, ausgeheizten Probe erhält man so aus der Differenz zu den vorhergehenden Messungen den Anteil der nicht reversiblen Verfärbung durch e-Browning und den reversiblen $\gamma$-Anteil. In Tabelle 2 sind diese Werte für 4 Beispiele mit erfindungsgemässen Zusammensetzungen aufgeführt (9, 11, 4 und 7).

Die Stärke der Verfärbung durch e- und $\gamma$-Browning wird beeinflusst durch die Betriebsbedingungen der Kathodenstrahlröhre, durch die Summe der Alkalien, durch das Verhältnis $Na_2O/K_2O$ und durch die $CeO_2$-Konzentration. Reine $Na_2O$-reiche Gläser neigen am stärksten zur Verfärbung, auch gegenüber UV-Strahlen.

Tabelle 2

Transmissionsrückgang ($\tau$) durch e- und $\gamma$-Browning bei Bestrahlung mit der Elektronenkanone (50 kV, 0,14 A·s/cm²) und anschliessendem 4-h-Ausheizen bei 400° C (e).

| Strahlen-art | Wellenlänge (nm) | $\tau$-Rückgang in % für | | | |
|---|---|---|---|---|---|
| | | 9 | 11 | 4 | 7 |
| e + $\gamma$ | 400 | 13 | 7,5 | 5,8 | 1 |
| | 450 | 8,7 | 3,7 | 2,0 | 0 |
| | 520 | 6,3 | 2,3 | 1,0 | 0 |
| | 600 | 6,8 | 3,0 | 1,0 | 0 |
| e | 400 | 1,5 | 0 | 1,5 | 0 |
| | 450 | 0,7 | 0 | 0,6 | 0 |
| | 520 | 0,3 | 0 | 0,5 | 0 |
| | 600 | 0,3 | 0 | 0,7 | 0 |
| $\gamma$ | 400 | 11,5 | 7,5 | 4,3 | 1 |
| | 450 | 8,0 | 3,7 | 1,4 | 0 |
| | 520 | 6,0 | 2,3 | 0,5 | 0 |
| | 600 | 6,5 | 3,0 | 0,3 | 0 |

In Tabelle 3 sind Beispiele von Gläsern des erfindungsgemässen Zusammensetzungsbereiches in Gew.-% aufgeführt.

Tabelle 4 enthält die wichtigsten Eigenschaftswerte der Gläser von Tabelle 3. Beispiel 1 in Tabelle 3 ist ein Glas, das ausserhalb des beanspruchten Bereichs liegt; es soll zeigen, wie kritisch die ausgewählten Zusammensetzungsbereiche sind.

Tabelle 3

Zusammensetzungsbeispiele in Gew.-%

| Bestand-teile | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| $SiO_2$ | 52,00 | 52,00 | 51,80 | 51,00 | 52,20 | 50,80 | 50,00 | 50,00 | 50,00 | 50,00 | 50,00 | 50,00 | 50,00 | 50,00 |
| $Al_2O_3$ | 1,40 | 1,40 | 0,80 | 1,00 | 1,60 | 0,60 | 0,60 | 3,00 | 1,00 | 0,50 | — | 0,40 | 0,60 | 0,60 |
| $Li_2O$ | 1,00 | 1,00 | 1,50 | 1,70 | 1,70 | 1,70 | 1,70 | 1,00 | 1,00 | 1,40 | 1,70 | 1,70 | 1,70 | 1,70 |
| $Na_2O$ | 10,00 | 10,00 | 7,70 | 8,00 | 8,50 | 8,90 | 6,50 | 10,40 | 10,70 | 9,00 | 10,00 | 8,90 | 8,70 | 8,50 |
| $K_2O$ | | | 1,70 | 1,80 | 2,50 | 2,50 | 4,50 | | | | | 2,50 | 2,50 | 2,00 |
| ZnO | 7,30 | 5,00 | 1,00 | | — | | | 3,50 | 2,00 | 4,50 | | | | 1,30 |
| BaO | 5,50 | 5,50 | 6,00 | 5,70 | 2,70 | 2,70 | 3,20 | 6,00 | 6,20 | — | 4,20 | 2,70 | 2,70 | 7,00 |
| SrO | 18,00 | 18,00 | 21,70 | 22,00 | 22,00 | 22,00 | 21,70 | 15,00 | 18,00 | 21,70 | 21,70 | 22,00 | 22,00 | 17,40 |
| $ZrO_2$ | 4,00 | 6,30 | 6,30 | 7,30 | 7,30 | 9,30 | 10,30 | 10,30 | 10,30 | 10,30 | 10,30 | 10,30 | 10,30 | 10,00 |
| F | 0,40 | 0,40 | 0,80 | 0,80 | 0,80 | 0,80 | 0,80 | 0,40 | 0,40 | 1,40 | 1,40 | 0,80 | 0,80 | 0,80 |
| $TiO_2$ | | | | | | | | | | — | 0,50 | — | | |
| $CeO_2$ | 0,20 | 0,20 | 0,70 | 0,70 | 0,70 | 0,70 | 0,70 | 0,20 | 0,40 | 1,20 | 0,20 | 0,70 | 0,70 | 0,70 |
| $Sb_2O_3$ | 0,50 | 0,50 | 0,30 | 0,30 | 0,30 | 0,30 | 0,30 | 0,50 | 0,30 | 0,30 | 0,30 | 0,30 | 0,30 | 0,30 |
| Prozent Summe | 100,30 | 100,30 | 100,30 | 100,30 | 100,30 | 100,30 | 100,30 | 100,30 | 100,30 | 100,30 | 100,30 | 100,30 | 100,30 | 100,30 |

0 127 633

Tabelle 4

*Eigenschaften der Gläser von Tabelle 3*

| Eigenschaften | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| $\alpha \times 10^7$ (20-300°C)/°C | | 96 | 94,9 | 99,0 | 101,3 | 101,4 | 103,8 | 96,6 | 92 | 96,7 | 93,3 | 102,3 | 102,4 | 101,8 | 98,6 |
| Tg (°C); $\eta$ ca. $10^{13,5}$ Po | | 511 | 518 | 502 | 507 | 504 | 513 | 528 | 536 | 530 | 512 | 506 | 515 | 516 | 508 |
| Ew (°C); $\eta \approx 10^{7,6}$ Po | | | | 684 | 684 | 683 | 691 | 716 | | | | | 695 | | 693 |
| $V_A$ (°C); $\eta = 10^4$ Po | | 933 | 958 | 947 | 937 | 953 | 954 | 991 | | 975 | 954 | 926 | 952 | 963 | 952 |
| Dichte (g/ccm) | | 3,065 | 3,072 | 3,094 | 3,09 | 3,024 | 3,065 | 3,084 | 3,088 | 3,121 | 3,133 | 3,116 | 3,089 | 3,092 | 3,114 |
| $T_{K100}$ (°C); $\tau = 10^8 \, \Omega \cdot$ cm | | | | 337 | 336 | 313 | | 359 | | | | 296 | 320 | 317 | 320 |
| E-Modul (N/mm²) | | | | 84,0 $\times 10^3$ | 84,7 $\times 10^3$ | 84,7 $\times 10^3$ | | 86,8 $\times 10^3$ | | | | | | 87,0 $\times 10^3$ | |
| Chem. Resistenz | Säurebest. n. DIN 1211 | 380 | 33 | 81 | 82 | 37/21 | 16 | 27 | 19 | 25 | 23 | 63 | 66 | 44/26 | 18,3 |
| | Wasserbest. n. DIN 12111 | 67 | 64 | 158 | 350 | 258 | 346 | 170 | 54 | 88 | 49 | 388 | 227 | 209 | 95 |
| | Laugenbest. n. DIN 52322 | | | 43 | | | | 32 | | | | | | | |
| Röntgenabsorption $\mu$ (cm) für 0,6 Å | | 51,77 | 53,54 | 57,21 | 58,12 | 54,93 | 58,81 | 61,17 | 54,46 | 58,65 | 63,08 | 61,45 | 60,85 | 60,91 | 57,64 |
| Entglasungsverh. bei fallender Temp. von 1320-550°C; Einschmelztemp. 1320°C im Pt-Röhrchen Einschmelzzeit: 30 min Temperzeit: 60 min | | | | >550°C keine Ent-glasg. | | >550°C keine Ent-glasg. | >550°C keine Ent-glasg. | >550°C keine Ent-glasg. | | | | | | >550°C keine Ent-glasg. | >550°C keine Ent-glasg. |

**Patentansprüche**

1. Gläser für Kathodenstrahlröhren mit hoher Röntgenschutzwirkung bei gleichzeitig guter Säurebeständigkeit und Strahlenstabilität mit Wärmedehnungskoeffizienten im Temperaturbereich von 20-300°C von 92 bis 103,8·10⁻⁷/°C, dadurch gekennzeichnet, dass ihre Röntgenschutzwerte μ für 0,6 Å (0,06 nm) zwischen 51,8 und 63,1·cm⁻¹ liegen, ihre Säurebeständigkeit nach DIN 12116 ≤ 100 mg/dm² ist, dass sie Transformationstemperaturen (Tg) von 502 bis 536°C, Erweichungstemperaturen (Ew) von 683 bis 716°C, Verarbeitungstemperaturen ($V_A$) von 926-991°C, Dichten (D) von 3,024-3,133 g/ccm und $T_{K100}$-Werte von 296-359°C aufweisen, und dass sie im Ansatz, berechnet als Oxid-Gew.-%, enthalten:

| (Gew.-%) | |
|---|---|
| $SiO_2$ | 50,0 − 52,2 |
| $Al_2O_3$ | 0 − 3,0 |
| $Li_2O$ | 1,0 − 1,7 |
| $Na_2O$ | 6,5 − 10,7 |
| $K_2O$ | 0 − 4,5 |
| $Li_2O + Na_2O + K_2O$ | 10,4 − 13,1 |
| F | 0,4 − 1,4 |
| $TiO_2$ | 0 − 0,5 |
| $CeO_2$ | 0,2 − 1,2 |
| ZnO | 0 − 5,0 |
| BaO | 0 − 7,0 |
| SrO | 15,0 − 22,0 |
| $ZrO_2$ | 6,3 − 10,3 |
| $ZnO + BaO + SrO + ZrO_2$ | 32,0 − 36,5 |
| $Sb_2O_3$ | 0,3 − 0,5 |

2. Glas nach Anspruch 1, dadurch gekennzeichnet, dass es im Ansatz, berechnet als Oxid-Gew.-% enthält:

| (Gew.-%) | |
|---|---|
| $SiO_2$ | 50,0 |
| $Al_2O_3$ | 0,6 |
| $Li_2O$ | 1,7 |
| $Na_2O$ | 8,5 |
| $K_2O$ | 2,0 |
| BaO | 7,0 |
| SrO | 17,40 |
| $ZrO_2$ | 10,00 |
| F | 0,8 |
| $CeO_2$ | 0,7 |
| $Sb_2O_3$ | 0,30 |
| ZnO | 1,30 |

3. Glas nach Anspruch 1, dadurch gekennzeichnet, dass es im Ansatz, berechnet als Oxid-Gew.-% enthält:

| (Gew.-%) | |
|---|---|
| $SiO_2$ | 50,0 |
| $Al_2O_3$ | 0,6 |

| (Gew.-%) | |
|---|---|
| $Li_2O$ | 1,7 |
| $Na_2O$ | 8,7 |
| $K_2O$ | 2,5 |
| BaO | 2,7 |
| SrO | 22,0 |
| $ZrO_2$ | 10,3 |
| F | 0,8 |
| $CeO_2$ | 0,7 |
| $Sb_2O_3$ | 0,3 |

**Claims**

1. Glasses for cathode ray tubes, having a high protective effect against X-rays while having simultaneously good resistance to acids and stability against radiation, with a heat expansion coefficient in the temperature range of 20-300°C of 92-103,8·10⁻⁷/°C, characterized by the fact that their protective values against X-rays, μ, for 0,6 Å (0,06 nm) lie between 51,8 and 63,1·cm⁻¹, their resistance to acid according to DIN 12116 is ≤ 100 mg/dm², that they have transformation temperatures (Tg) of from 502 to 536°C, softening temperatures (Ew) of from 683 to 716°C, processing temperatures ($V_A$) of from 926 to 991°C, densities (D) of from 3,024 to 3,133 g/ccm and $T_{K100}$-values of from 296 to 359°C, and that they contain in the starting mixture, calculated in percent by weight of oxides:

| (% by weight) | |
|---|---|
| $SiO_2$ | 50,0 to 52,2 |
| $Al_2O_3$ | 0 to 3,0 |
| $Li_2O$ | 1,0 to 1,7 |
| $Na_2O$ | 6,5 to 10,7 |
| $K_2O$ | 0 to 4,5 |
| $Li_2O + Na_2O + K_2O$ | 10,4 to 13,1 |
| F | 0,4 to 1,4 |
| $TiO_2$ | 0 to 0,5 |
| $CeO_2$ | 0,2 to 1,2 |
| ZnO | 0 to 5,0 |
| BaO | 0 to 7,0 |
| SrO | 15,0 to 22,0 |
| $ZrO_2$ | 6,3 to 10,3 |
| $ZnO + BaO + SrO + ZrO_2$ | 32,0 to 36,5 |
| $Sb_2O_3$ | 0,3 to 0,5 |

2. A glass according to Claim 1, characterized by the fact that it contains in the starting mixture, calculated in percent by weight of oxides:

| (% by weight) | |
|---|---|
| $SiO_2$ | 50,0 |
| $Al_2O_3$ | 0,6 |
| $Li_2O$ | 1,7 |
| $Na_2O$ | 8,5 |
| $K_2O$ | 2,0 |

**0 127 633**

| (% by weight) | |
|---|---|
| BaO | 7,0 |
| SrO | 17,40 |
| ZrO$_2$ | 10,00 |
| F | 0,8 |
| CeO$_2$ | 0,7 |
| Sb$_2$O$_3$ | 0,30 |
| ZnO | 1,30 |

3. A glass according to Claim 1, characterized by the fact that it contains in the starting mixture, calculated in percent by weight of oxides:

| (% by weight) | |
|---|---|
| SiO$_2$ | 50,0 |
| Al$_2$O$_3$ | 0,6 |
| Li$_2$O | 1,7 |
| Na$_2$O | 8,7 |
| K$_2$O | 2,5 |
| BaO | 2,7 |
| SrO | 22,0 |
| ZrO$_2$ | 10,3 |
| F | 0,8 |
| CeO$_2$ | 0,7 |
| Sb$_2$O$_3$ | 0,3 |

## Revendications

1. Verres pour tubes cathodiques à grand effet de protection contre les rayons X et possédant simultanément une bonne résistance aux acides et une bonne stabilité aux rayonnements avec des coefficients de dilatation thermique de 92 à 103,8·10$^{-7}$/° C dans une gamme de températures de 20 à 300° C, caractérisés en ce que leurs valeurs ⩽ de protection contre les rayons X pour 0,6 Å (0,06 nm) sont comprises entre 51,8 et 63,1·cm$^{-1}$, leur résistance aux acides conformément à DIN 12116 est inférieure ou égale à 100 mg/dm², en ce qu'ils présentent des températures de transformation (Tg) de 502 à 536° C, des températures de ramollissement (Ew) de 683 à 716° C, des températures de mise en œuvre (V$_A$) de 926 à 991° C, des densités (D) de 3,024 à 3,133 g/cm³ et des valeurs de T$_{K100}$ de 296 à 359° C, et en ce qu'ils contiennent les teneurs suivantes, calculées comme des pour-cent en poids d'oxydes:

| (% en poids) | |
|---|---|
| SiO$_2$ | 50,0 à 52,2 |
| Al$_2$O$_3$ | 0 à 3,0 |
| Li$_2$O | 1,0 à 1,7 |
| Na$_2$O | 6,5 à 10,7 |
| K$_2$O | 0 à 4,5 |
| Li$_2$O + Na$_2$O + K$_2$O | 10,4 à 13,1 |
| F | 0,4 à 1,4 |
| TiO$_2$ | 0 à 0,5 |
| CeO$_2$ | 0,2 à 1,2 |
| ZnO | 0 à 5,0 |
| BaO | 0 à 7,0 |
| SrO | 15,0 à 22,0 |
| ZrO$_2$ | 6,3 à 10,3 |
| ZnO + BaO + SrO + ZrO$_2$ | 32,0 à 36,5 |

2. Verre selon la revendication 1, caractérisé en ce qu'il contient les teneurs suivantes, calculées en pour-cent en poids d'oxydes:

| (% en poids) | |
|---|---|
| SiO$_2$ | 50,0 |
| Al$_2$O$_3$ | 0,6 |
| Li$_2$O | 1,7 |
| Na$_2$O | 8,5 |
| K$_2$O | 2,0 |
| BaO | 7,0 |
| SrO | 17,40 |
| ZrO$_2$ | 10,00 |
| F | 0,8 |
| CeO$_2$ | 0,7 |
| Sb$_2$O$_3$ | 0,30 |
| ZnO | 1,30 |

3. Verre selon la revendication 1, caractérisé en ce qu'il contient les teneurs suivantes, calculées en pour-cent en poids d'oxydes:

| (% en poids) | |
|---|---|
| SiO$_2$ | 50,0 |
| Al$_2$O$_3$ | 0,6 |
| Li$_2$O | 1,7 |
| Na$_2$O | 8,7 |
| K$_2$O | 2,5 |
| BaO | 2,7 |
| SrO | 22,0 |
| ZrO$_2$ | 10,3 |
| F | 0,8 |
| CeO$_2$ | 0,7 |
| Sb$_2$O$_3$ | 0,3 |